# FASCICULE DE BREVET EUROPEEN

(11) **EP 1 012 710 B1**
(45) Date de publication et mention de la délivrance du brevet: **11.04.2007**
(21) Numéro de dépôt: 97953971.5
(22) Date de dépôt: 30.12.1997
(51) Int. Cl.: G06F 9/445, G06F 9/45

(54) **PROCEDE DE CHARGEMENT D'UN PROGRAMME D'UTILISATION DANS UN SUPPORT A PUCE**
VERFAHREN ZUM LADEN EINES ANWENDUNGSPROGRAMMS AUF EINE CHIPKARTE
METHOD FOR LOADING AN APPLICATION PROGRAMME IN A CHIP CARD

(30) Priorité: 30.12.1996 FR 9616212
(43) Date de publication de la demande: 28.06.2000
(73) Titulaire: GEMPLUS, 13881 Gémenos Cédex (FR)
(72) Inventeur: PARADINAS, Pierre, F-13590 Meyreuil (FR); VANDEWALLE, Jean-Jacques, F-13001 Marseille (FR); BIGET, Patrick, F-13400 Aubagne (FR); GEORGE, Patrick, Redwood City, CA 94061 (US); LECOMTE, Sylvain, F-59000 Lille (FR)
(86) Numéro de dépôt international: PCT/FR1997/002448
(87) Numéro de publication internationale: WO 1998/029803

(56) Documents cités:
- EP-A- 0 519 071
- FR-A- 2 667 171
- EBERHARD ENGER: "P-Code-Interpreter für einen 8-Bit-Mikroprozessor" ELEKTRONIK, vol. 30, no. 8, 1981, MUNCHEN DE, pages 77-81, XP002039520
- GOSLING J: "JAVA INTERMEDIATE BYTECODES ACM SIGPLAN WORKSHOP ON INTERMEDIATE REPRESENTATIONS (IR '95)" ACM SIGPLAN NOTICES, vol. 30, no. 3, 1 mars 1995, pages 111-118, XP000567085

## Description

La présente invention a pour objet un procédé de chargement d'un programme d'utilisation dans un support portable à puce. Elle est applicable en particulier dans le domaine des cartes à puce. Elle concerne plus particulièrement les situations dans lesquelles on veut faire co-exister dans une mémoire d'une carte à puce plusieurs applications de types différents. On appelle application la suite des opérations effectuées tant à l'intérieur d'une carte à puce que dans un lecteur avec lequel cette carte est en relation et qui conduisent à la satisfaction d'un besoin exprimé par un utilisateur porteur de la carte. Ces opérations comportent des traitements électroniques à l'intérieur des circuits de la carte et du lecteur, et des actions, éventuellement mécaniques, sur des périphériques auxquels le lecteur est relié. Une application comporte donc, enregistré dans la mémoire de la carte, un programme d'utilisation de cette carte à cette fin, ce programme comportant un ensemble d'instructions.

Une carte à puce comporte dans sa structure générale un micro-processeur en relation avec une mémoire programme, une ou des mémoires de données et une interface de communication avec le monde extérieur. Dans le but de rendre l'utilisation d'une carte à puce plus pratique il a été envisagé de faire co-exister sur une même carte plusieurs programmes d'utilisation. Par exemple, un programme d'utilisation bancaire et un programme d'utilisation de réservation de voiture. Les deux prestataires de service responsables de ces programmes d'utilisation, une banque et un organisme bancaire, vont en général ne rien avoir en commun, étant totalement indépendants l'un et l'autre. Ils peuvent même ignorer que des cartes à puce portées par leurs clients sont munies de programmes d'utilisation des services d'un autre prestataire.

Le problème posé par ce type de partage de ressources de la carte à puce par plusieurs applications est fondamentalement le respect de l'intégrité, par un des programmes d'utilisation, des données et des instructions d'un autre programme d'utilisation.

Pour résoudre le problème de la co-existence, il a été envisagé plusieurs solutions qui reposent toutes dans leur principe sur l'intervention d'une autorité supérieure, par exemple l'entreprise qui fabrique les cartes. Dans ce cas plusieurs solutions sont envisageables.

Par exemple, les fabricants de circuits intégrés, qui fabriquent les circuits intégrés à enchâsser dans les cartes peuvent être investis de cette autorité. Autrement, le circuit intégré fabriqué peut être totalement nu, ou peut ne comporter dans sa mémoire programme qu'un ensemble élémentaire d'instructions destinées à le faire fonctionner. Cet ensemble d'instructions élémentaires est le système d'exploitation du circuit intégré. Ce système d'exploitation peut lui-même être programmé à l'intérieur du circuit intégré, soit directement à la fabrication (dans ce cas il est programmé le plus généralement par masque), ou par exemple au cours d'une opération de test.

Dans une autre façon de faire, le système d'exploitation peut être installé dans le circuit intégré par une entreprise qui met à la disposition d'un prestataire de service un lot de cartes avec un système d'exploitation et des programmes d'utilisation adaptés aux exigences de ce prestataire de service. Dans ce dernier cas, la solution retenue pour faire co-exister différentes applications sur un même circuit intégré, dans une même carte à puce, et de concevoir à chaque fois un système d'exploitation spécial afin que plusieurs applications de type différent, mais connues à l'avance, puissent être mémorisées dans la carte et que les applications ne puissent retentir les unes sur les autres sans l'accord des prestataires de service concernés.

Cette solution présente l'inconvénient que l'entreprise qui la met en oeuvre doit connaître dès le départ toutes les utilisations qui vont être faites avec les cartes qu'elle met à la disposition des prestataires de service. Ceci empêche donc toute évolution. L'autre inconvénient présenté par cette méthode et qu'elle repose sur la confiance à faire par les différents prestataires de service à la société qui met en oeuvre le système d'exploitation et les programmes d'application dans les circuits intégrés des cartes. Les applications pouvant comporter des actions sensibles pour ces prestataires de service, cette confiance est difficile à obtenir ou à contrôler.

En plus de ce problème d'évolution des applications, il se présente la difficulté que la mémorisation de programmes d'utilisation dans la mémoire du circuit intégré de la carte à puce ne peut se faire qu'en désignant dans ces programmes des adresses absolues des zones mémoires disponibles dans cette carte. C'est-à-dire qu'il serait nécessaire de divulguer toute la structure du circuit intégré de la carte, notamment divulguer les adresses où sont stockées les secrets de la carte, ses clefs privées de chiffrement, si on voulait que quiconque puisse enregistrer ses propres programmes d'utilisation dans une carte à puce.

L'invention a pour objet de remédier à ce problème en mettant en oeuvre, dans le système d'exploitation du circuit intégré, une macro instruction de chargement dont les caractéristiques consistent d'une part à calculer des adresses absolues où doivent être rangées les instructions du programme d'utilisation à partir d'une adresse de départ connue, à modifier le programme d'utilisation en conséquence et à enregistrer les instructions de ce programme à ces adresses calculées.

Selon l'invention, le programme d'utilisation du circuit intégré comporte d'autre part une définition d'un espace mémoire de données qui sera nécessaire pour la mise en oeuvre de cette utilisation. Dans l'invention, la macro instruction de chargement lit alors cette définition présente dans ce programme d'utilisation (généralement en tête de ce programme), et réserve en mémoire de données une place nécessaire pour stocker les données correspondantes. Au cours du chargement, la macro instruction de chargement de l'invention effectue, de préférence, aussi en plus une mise à jour d'une zone mémoire représentative de l'occupation en mémoire du programme d'utilisation relatif à cette application. Cette zone mémoire peut comprendre par exemple un descripteur de fichiers.

La demande de brevet européen numéro EP 0 519 071 divulgue le chargement de programmes d'une bibliothèque de fonctions en mémoire d'un terminal d'ordinateur. Les adresses absolues des zones mémoires disponibles dans le terminal pour stocker un programme sont définies avant l'enregistrement et sont stockées dans une table de gestion d'adresses qui est utilisée au moment du chargement du programme.

L'invention concerne un procédé de chargement dans une puce électronique selon la revendication 1, portée par un support portable à puce et comprenant un microprocesseur et une mémoire, d'un programme d'utilisation de ce support à puce, ce programme comportant des instructions dans lequel,
- on munit la puce d'un système d'exploitation comportant notamment un programme de chargement en mémoire, ce système d'exploitation commandant le fonctionnement du microprocesseur et de la mémoire,
- on enregistre dans la mémoire, au moyen du programme de chargement en mémoire, le programme d'utilisation
- on définit dans le programme d'utilisation, une quantité de place nécessaire en mémoire de la puce pour contenir des données à utiliser par ce programme d'utilisation,
- on fait calculer par ce programme de chargement en mémoire, au moment de ce chargement, des adresses absolues pour enregistrer en mémoire des données utilisées dans le programme d'utilisation et les instructions de ce programme d'utilisation,
- on modifie en conséquence ce programme d'utilisation, et
- on fait enregistrer par ce programme de chargement les données et les instructions présentes dans le programme d'utilisation à ces adresses absolues calculées.

Un autre problème inhérent aux cartes à puce est de donner aux prestataires de service la possibilité de programmer de nouvelles applications, ou de modifier leurs applications, sans avoir à connaître le fonctionnement du système d'exploitation de l'invention. Il est alors prévu dans l'invention de munir le circuit intégré de la carte d'un programme interpréteur de commande. Un tel programme interpréteur de commande est capable de faire exécuter par le micro-processeur du circuit intégré des instructions en un langage évolué (symbolique) et lues dans une mémoire programme, en les interprétant au vol, c'est-à-dire en les transformant en instructions exécutables par le micro-processeur. Ces instructions exécutables peuvent alors être chargées telles qu'elles dans le registre d'instructions de ce micro-processeur.

Dans ces conditions, les seules contraintes qui pèsent sur les prestataires de service sont de munir leurs programmes d'utilisation, 1 premièrement d'une définition de l'espace nécessaire pour les données, et d'autre part d'utiliser un programme en langage évolué communément utilisé dans le domaine informatique. Par exemple, 1 ce programme en langage évolué peut être un programme en langage C, FORTH, FORTRAN ou COBOL ou autre. Le cas échéant, la macro instruction de chargement pourra être capable de reconnaître au préalable le langage évolué utilisé de façon à orienter convenablement l'interprétation des commandes. Un interpréteur différent correspond alors aux différents types de langage.

L'invention a donc pour objet dans ce but, un procédé comme le précédent caractérisé en ce que
- on munit la puce d'un système d'exploitation comportant un programme 33 interpréteur de commande,
- on enregistre dans la mémoire de la puce, au moyen du programme de chargement en mémoire, un programme 15 d'utilisation du support à puce comportant des instructions écrites dans un langage évolué, non directement exécutables par le microprocesseur, dans le but de faire exécuter par le microprocesseur des instructions interprétées résultant de ces instructions non directement exécutables après leur avoir fait subir une interprétation par le programme interpréteur de commande,
- on fait calculer par le programme de chargement en mémoire, au moment de cet enregistrement, des adresses pour enregistrer en mémoire de la puce les instructions du programme en langage évolué,
- on modifie les instructions en langage évolué en fonction de ce calcul,
- on enregistre ces instructions en langage évolué dans la mémoire à des adresses absolues calculées par ce programme de chargement.

L'invention sera mieux comprise à la lecture de la description qui suit, et à l'examen des figures qui l'accompagnent. Celles-ci ne sont données qu'à titre indicatif et nullement limitatif de l'invention. Les figures montrent:
- figure 1: une structure de circuit intégré pour un support électronique apte à mettre en oeuvre le procédé de l'invention ;
- figure 2: un organigramme montrant la suite des opérations de chargement selon le procédé de l'invention ;
- figures 3a à 3c: un exemple, schématique, d'un programme écrit en langage évolué, et avec un adressage relatif, et les différentes transformations qu'il subit avant son enregistrement dans la mémoire du circuit intégré ;
- figure 4: une description de la syntaxe de certaines instructions utilisables dans un tel programme.

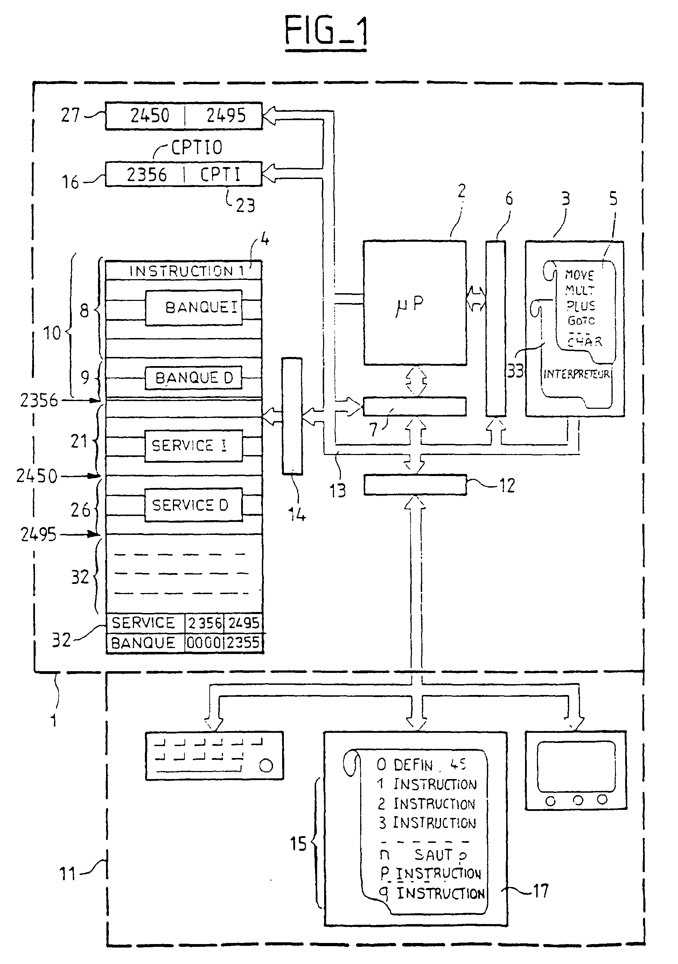

La figure 1 montre la structure d'un circuit intégré pour un support portable apte à mettre en oeuvre le procédé de l'invention. Une puce électronique 1 est portée par un support portable non représenté. Dans un exemple, le support portable est une carte à puce. La puce 1 comporte un micro-processeur 2 et une mémoire. Dans l'exemple, la mémoire est ici une mémoire double. Elle comporte une première mémoire 3 destinée à mémoriser un système d'exploitation circuit intégré. La mémoire 3 est de préférence une mémoire non programmable, par exemple programmée par masque ou éventuellement programmable puis verrouillée après sa programmation pour ne plus l'être par la suite. Elle est de type non volatile, ses cellules mémoires pouvant être des cellules de type EPROM ou bien EEPROM. Une autre partie 4 de la mémoire, est du type programmable et effaçable à volonté, de préférence elle est du type EEPROM. Elle est aussi non volatile. Le prestataire de service peut y inclure tous les programmes d'utilisation qu'il veut afin que le circuit intégré 1 puisse effectuer toutes applications désirées pour son compte.

Le système d'exploitation enregistré dans la mémoire 3, comporte au moins un premier ensemble d'instructions 5, de type connu. Par exemple, ces instructions sont des instructions, MOVE, MULT, PLUS ou GOTO, dont le but est, une fois chargée dans un registre d'instructions 6 du processeur 2, de provoquer le transfert de données (ou d'instructions) dans un registre de données 7 du micro-processeur 2, en vue de leur traitement par ce dernier. Le fonctionnement, de type connu, de ce système est le suivant. Au moment du lancement d'un programme d'utilisation, contenu par exemple dans une partie 8 de la mémoire 4, une instruction lue dans cette partie provoque le chargement d'une instruction du système d'exploitation 5 dans le registre 6 (dans certains cas elle provoque le chargement successif de plusieurs des instructions du système d'exploitation). En même temps sont chargées dans le registre de données 7 du microprocesseur, les données utiles. Les données sont par exemple prélevées dans une partie 9 de la mémoire 4. Puis ces données sont traitées par le microprocesseur 2, le résultat se retrouvant dans le registre 7 (par exemple). Les parties 8 et 9 ensemble, forment une zone 10 de la mémoire 4 réservée à l'application concernée. Dans l'exemple montré, l'application est schématiquement une application de type bancaire. Elle peut par exemple correspondre à un scénario de visualisation de solde de compte bancaire sur un écran d'un lecteur.

Dans l'état de la technique, la mise en place des instructions de l'application bancaire et des données relatives à cette application dans les zones 8 et 9 respectivement de la mémoire 4, est provoquée par un système externe 11, qui prend la main sur le circuit intégré 1 par l'intermédiaire d'une interface 12 de communication du circuit intégré 1 avec le monde extérieur. L'interface 12, ainsi que tous les circuits du circuit intégré sont reliés entre eux par un bus 13 qui, pour simplifier, sera utile à la transmission des adresses, des données, et des commandes.

Le pilotage d'un circuit 14 d'écriture dans la mémoire 4 peut ainsi être mené depuis l'extérieur, par le circuit 11. Il est nécessaire de piloter le circuit 14 d'écriture avec des désignations d'adresses absolues. En effet, par exemple, la première instruction INSTRUCTION 1, doit être stockée à l'adresse 0000 de la mémoire 4. Dans l'état de la technique, le circuit 14 agit sous le contrôle du circuit 11 par l'intermédiaire de l'interface 12. Le circuit 11, et donc ceux qui le commandent devaient être investis de la connaissance nécessaire, et de la confiance à leur faire, pour mener à bien cet enregistrement.

Dans l'invention pour éviter des actions intempestives d'un circuit 11, notamment dans le cas ou on veut mettre plusieurs types d'utilisation dans la zone 4, on s'interdit de stocker des instructions dans la zone 8 sous le contrôle d'un circuit externe 11.

Pour arriver au résultat, dans l'invention on munit le système d'exploitation 5 d'une macro instruction de chargement, spécifique, ici symboliquement représentée par une instruction CHAR de ce système d'exploitation. L'instruction CHAR a pour objet d'enregistrer dans la mémoire 4 les instructions d'un programme 15 d'utilisation, ainsi que de réserver la place nécessaire en mémoire pour les données utilisées, par le programme 15.

On va décrire maintenant ces deux opérations, étant entendu qu'elles peuvent se faire dans un ordre indifférent du moment qu'il est prévu à l'avance. En pratique, le programme 15 et les définitions de données utilisées sont présentés à L'interface 12 sous la forme d'un fichier 17 que l'instruction CHAR consulte. Dans l'invention, au moyen d'un compteur 16 qui compte les instructions déjà enregistrées, on mémorise une adresse CPTI0 initiale, montrant qu'elle est la première adresse d'instruction disponible pour un nouveau programme.

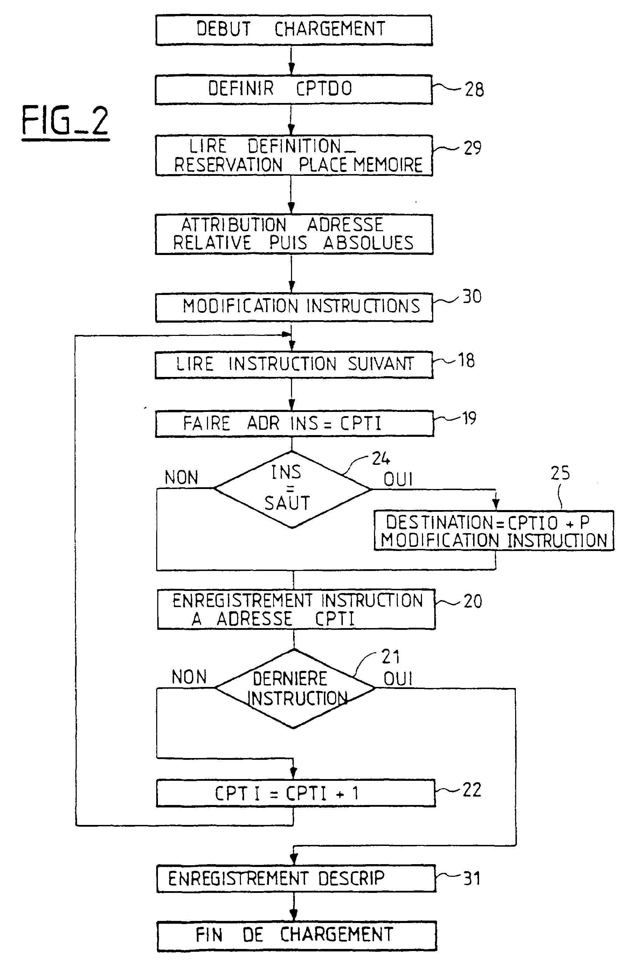

Le chargement se produit alors de la façon suivante. Figure 2, le microprocesseur 2 en exécution de l'instruction CHAR va lire, étape 18, au travers de l'interface 12, la première instruction du programme 15, celle dont le rang est 1. L'instruction CHAR affecte alors, étape 19, à cette instruction de rang 1 une adresse absolue égale à CPTI. Au début du chargement l'adresse CPTI est une adresse initiale CPTIO. Dans un exemple tout à fait arbitraire, l'adresse CPTI0 est 2356 dans la mémoire 4. Au cours d'une étape 20 suivante de l'instruction CHAR, cette instruction de rang 1, est enregistrée dans la mémoire 4 dans la zone 21 à l'adresse voulue: 2356. l'affectation évoquée comporte donc le calcul de l'adresse absolue. Cette affectation peut comporter la modification du programme pour faire figurer en tête de l'instruction (ou en queue) l'adresse absolue où elle doit être enregistrée. Au moment de cet enregistrement l'instruction CHAR lit cette adresse absolue et enregistre l'instruction à l'adresse correspondante. Par une étape de test 21, l'instruction CHAR vérifie ensuite que l'instruction du programme 15 (qui vient d'être enregistrée) était la dernière à enregistrer. Comme ce n'est pas le cas ici, à une étape 22 le contenu du compteur 16 est incrémenté de manière à ce qu'une zone 23 du compteur 16 comporte maintenant une valeur courante CPTI augmenté (dans un exemple égale à 2357). Puis l'instruction CHAR provoque le retour à l'étape 18 afin de lire une instruction suivante dans le programme 15, l'instruction de rang 2, et de l'enregistrer à l'adresse 2357. ainsi de suite toutes les instructions sont enregistrées.

Un programme comme le programme 15 comporte normalement des instructions de saut. Ainsi qu'on l'a montré dans le programme 15, il est prévu une instruction de rang n provoquant un saut à l'instruction de rang p. Une instruction de saut est normalement une instruction de type IF ou GOTO. On emploie aussi quelquefois le terme d'instruction de branchement. Le rang p est ici la destination de l'instruction de rang n. S'agissant d'un programme en langage évolué de type connu, l'instruction CHAR comporte alors un test 24 pour savoir si l'instruction de rang n qui est à enregistrer est une instruction comportant un saut ou non. Jusqu'à présent cela n'avait pas été le cas. C'est par contre le cas pour l'instruction de rang n.

Au cours d'une étape 25, la destination p (indication relative) est remplacée par une destination absolue (une adresse absolue en mémoire). Cette adresse absolue est égale à l'état du compteur d'instructions initiales CPTIO additionné à la valeur p. Au cours de l'instruction 25, après avoir calculé l'adresse de destination absolue, l'instruction CHAR modifie l'instruction de rang n pour la transformer en une instruction dans laquelle la destination n'est plus p (destination relative) mais la nouvelle destination absolue. Par la suite, à l'étape 20 de l'instruction CHAR, on enregistre l'instruction de rang n à l'adresse CPTIO+n-1 dans la zone 21. Ainsi de suite le programme se déroule, jusqu'à l'enregistrement des q instructions du programme 15.

Dans le cas où la suite des rangs 1, 2, 3, n, p, q des instructions du programme 16 comporteraient des trous, il peut être prévu par l'instruction CHAR, premièrement, de combler ces trous (calculer un adressage relatif continu), et deuxièmement de modifier une première fois, en cas de saut, les adresses de destinations p pour tenir compte d'une séquence continue. Dans ce cas p serait remplacé par p' (correspondant à des rangs évoluant continûment) et l'étape 25 d'instruction CHAR s'appliquerait à la valeur p'.

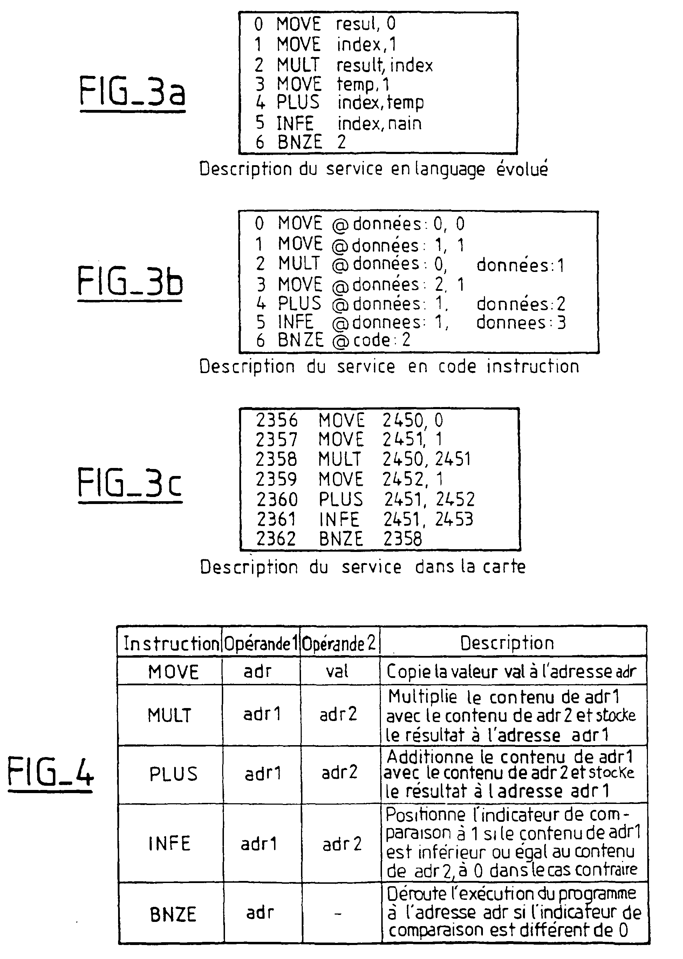

Pour la réservation en mémoire des données, on peut agir de deux façons. D'une première façon, représentée sur les figures 3a à 3c des variables resul, index, temp, nain du programme 15 sont détectées lors d'une première lecture du programme 15. Une adresse ordonnée @ donnée: 0 à @ donnée: 3, leur est alors petit à petit attribuée. Ces adresses ordonnées relatives sont ensuite transformées en des adresses absolues (avec un même mécanisme que pour les instructions). Le programme 15 est alors modifié pour remplacer ces adresses relatives ordonnées par des adresses absolues, ici de 2450 à 2495. Ceci est apparent sur les figures 3a à 3c.

D'une autre façon, le programme 15 comportera, une instruction DEFIN de définition comportant comme argument associé, la quantité de place nécessaire en mémoire. Par exemple ici, le programme 15 débute par l'instruction de rang 0, DEFIN assortie de l'argument 45. Avec cette instruction de rang 0, l'instruction CHAR sait qu'il faut réserver dans la mémoire de données 4, une zone 26, pour y stocker les données à utiliser par le programme 15. Ceci permet d'utiliser, le cas échéant, une facilité de stockage en longueur variable du système d'exploitation 5.

Dans les deux cas, dans l'invention, on utilise un deuxième compteur 27, pour contenir d'une part, l'adresse de départ disponible dans la mémoire 4 pour y stocker les données et d'autre part une adresse finale tenant compte du nombre de variables utilisées dans le programme 15, ou de l'argument (ici 45) indiqué dans l'ordre DEFIN. La place réservée en mémoire est intermédiaire entre ces deux adresses. On verra par la suite comment les compteurs 16 et 27 peuvent être aménagés différemment. L'explication donnée ici est une explication cherchant à faire comprendre le procédé de l'invention.

Dans un exemple préféré, les zones 21 et 26 de la mémoire sont contigües: leurs adresses se suivent. L'adresse de départ, contenant la valeur CPTIO du compteur 16, et l'adresse finale du compteur 27 déterminent l'occupation totale en mémoire. Dans ces conditions, le début du compteur des adresses de données 27, peut être calculé par l'instruction CHAR au cours d'une étape 28 initiale. Ainsi, avec un test analogue au test 22, on aura montré qu'on est passé par la dernière instruction de rang q: on sait combien il y a d'instructions, on peut attribuer aux données des adresses CPTD0 et suivantes commençant à CPTIO+q et suivantes.

L'organigramme de la figure 2 est optionnel, on peut faire différemment comme on le comprendra par la suite. Dans un exemple, où le programme 15 comporte 94 instructions, q=94, l'adresse de départ du compteur de données CPTD0 sera l'adresse 2450 correspondant à l'addition de l'adresse de départ du compteur CPTIO et du nombre d'instructions mémorisées. Au cours d'une étape 29, l'instruction CHAR lit ensuite l'instruction de rang 0, si elle existe, et réserve en mémoire la place de la zone 26, jusqu'à l'adresse 2495. Puis on modifie avec l'instruction CHAR, à l'étape 30, les instructions du programme pour y inscrire les adresses absolues nécessaires: les adresses de saut (l'adresse 2358 pour l'instruction de rang 6 BNZE rangée elle-même à l'adresse 2362), et les adresses en mémoire de là où sont stockées les valeurs des variables utilisées dans le programme.

Les figures 3a à 3c montrent une explication du programme en vue de son enregistrement dans la mémoire 4. Dans un premier temps, figure 3b, les variables évoquées sont remplacées par des adresses ordonnées relatives dont l'ordre correspond à l'ordre d'apparition des variables dans le programme.

En pratique, l'instruction CHAR transforme le programme 15 montré sur la figure 3a en un programme 15 montré sur la figure 3c. Il peut être plus judicieux de faire la réservation de données d'abord, d'affecter aux données et aux variables des adresses absolues dans la mémoire de donnée 26 et d'affecter ensuite leur place aux instructions dans la mémoire 4.

Une fois que le programme 15 a été chargé dans les zones 21 et 26 de la mémoire 4, l'instruction CHAR enregistre à une étape 31 un descripteur dans une zone 32, de la mémoire 4. Le descripteur en zone 32 concerne le nom de l'application, ici il s'agira par exemple de l'application SERVICE. Il concerne aussi les adresses absolues de départ, 2356, et d'arrivée, 2495, où sont stockées toutes les instructions et données du programme. L'avantage de stocker les instructions dans la zone 21 à des adresses de rangs inférieurs à ceux des données de la zone 26, est que le programme peut commencer directement à l'adresse 2356. A la reconnaissance du nom de l'application SERVICE, le descripteur en zone 32 renseigne le système d'exploitation sur le fait que le programme concerné commence à l'adresse 2356.

Telles que les instructions sont indiquées dans le programme 15, et sur les figures 3a à 3c, elles correspondent, selon un mode préféré de l'invention, à un langage évolué, symbolique, lui-même renvoyant à des instructions exécutables par le micro-processeur. Par exemple, MOVE a pour objet de copier la valeur qui est donnée dans le deuxième argument à l'adresse qui est indiquée dans le premier argument. L'instruction MULT a pour objet de multiplier le contenu stocké à l'adresse du deuxième argument de cette instruction par le contenu stocké à l'adresse du premier argument et de mettre le tout à l'adresse du premier argument. La figure 4 rappelle ces particularités. On y remarque notamment que l'instruction BNZE est l'instruction de saut.

Normalement, un tel programme est compilé avant son enregistrement dans la mémoire 4. La compilation a pour objet de transformer chaque instruction MOVE, MULT ou autres, qui sont des macro instructions, en des suites de micro instructions directement exécutables par le microprocesseur 2. Ces suites de micro instructions ont bien entendu pour objet d'accomplir la fonction de la macro instruction, mais aussi d'organiser toutes les lectures en mémoire 3 et 4, tous les transferts sur le bus 13, toutes les libérations de registre 7 utiles, etc....

Dans l'invention pour faciliter le travail des prestataires de service, on ne leur impose pas de compiler leur programme ni bien sûr d'écrire le programme 15 en langage machine exécutable par le processeur 2.

Plutôt que de stocker les instructions en langage directement exécutable par le micro-processeur 2, donc des instructions chargeables telles quelles dans le registre d'instructions 6 de ce micro-processeur, on préfère demander aux prestataires de service de programmer leurs programmes 15 dans un langage évolué. Avec des instructions du type de celles vues dans la figure 4.

Dans ce cas, on munit par ailleurs le système d'exploitation enregistré dans la mémoire 3 d'un interpréteur 33 de commande qui est capable de transformer chacune des macro-instructions MOVE MULT PLUS, etc.. en une suite de micro-instructions directement exécutables par le microprocesseur 2.

Dans l'invention l'instruction CHAR est une des instructions chargées dans le système d'exploitation 5. Le programme interpréteur de commande 32, comporte alors une séquence de micro-instructions correspondant à cette instruction CHAR.

Les micro instructions sont celles évoquées par les étapes 18 à 31. Au moment de la mise en oeuvre d'une application, une instruction (en langage évolué) prélevée dans la zone 21 renvoie alors à une macro-instruction à interpréter par le programme interpréteur 33.

Au cours de l'application, on utilise chaque fois le descripteur d'application pour vérifier que les adresses sur lesquelles le programme engagé agit sont des adresses contenues entre les limites indiquées par le descripteur en zone 32.

De préférence, le système d'exploitation ainsi que le programme interpréteur 33, lorsqu'on choisit d'en mettre un en oeuvre, sont enregistrés dans la mémoire 3 de type non programmable au moment de la fabrication du circuit intégré 1. De cette façon, ces parties de programme ne peuvent pas être modifiées par des applications chargées, dans la mémoire 4 par exemple.

On a décrit les compteurs 16 et 27 avec notamment des registres. Il est cependant possible de remplacer ces compteurs par des instructions de type comptage, exécutées par le micro-processeur 2, et accompagnant l'instruction CHAR. Ces instructions de comptage auraient notamment pour objet de passer en revue les descripteurs déjà présent dans la mémoire. Ces compteurs peuvent néanmoins avoir également une allure physique. Ainsi, la mémorisation des valeurs de départ des compteurs 16 et 27 peut être remplacée par une lecture du dernier descripteurs 32. Lorsque plusieurs applications sont enregistrées dans la mémoire 4, il y a plusieurs descripteurs. Le dernier inscrit est trouvé en lisant la mémoire à l'envers: c'est le dernier emplacement utilisé avant un emplacement vide.

## Revendications

1. Procédé de chargement dans une puce électronique (1), portée par un support à puce et comprenant un micro-processeur (2) et une mémoire (3, 4), d'un programme d'utilisation de ce support à puce, ce programme comportant des instructions agissant sur des données, le procédé comprenant :
- une étape consistant à munir la puce d'un système d'exploitation (5) comportant notamment un programme (CHAR) de chargement en mémoire, ce système d'exploitation commandant le fonctionnement du micro-processeur et de la mémoire, et
- une étape d'enregistrement (20) dans la mémoire, au moyen du programme de chargement en mémoire, dudit programme d'utilisation,
ladite étape d'enregistrement comprenant:
- une étape de définition dans le programme d'utilisation, d'une quantité de place nécessaire en mémoire (4) de la puce pour contenir des données à utiliser par le programme d'utilisation,
- une étape de calcul, réalisée au moment de l'enregistrement du programme en mémoire, des adresses absolues où doivent être enregistrées en mémoire de la puce lesdites instructions et lesdites données utilisées par ledit programme, lesdites adresses absolues pour chaque instruction dudit programme étant calculées à partir d'une adresse absolue de départ disponible dans la mémoire pour y stocker lesdites instructions et d'un rang associé à chaque instruction dans ledit programme, et lesdites adresses absolues pour chaque donnée utilisée par ledit programme étant calculées à partir d'une adresse absolue de départ disponible dans la mémoire pour y stocker lesdites données et d'une adresse relative attribuée de manière ordonnée à chaque donnée utilisée par ledit programme,
- une étape de modification dudit programme à charger consistant à remplacer, pour chaque instruction dudit programme, ledit rang associé à ladite instruction par ladite adresse absolue calculée correspondante et, pour chaque donnée utilisée par ledit programme, ladite adresse relative ordonnée attribuée à ladite donnée par ladite adresse absolue calculée correspondante, et
- une étape d'enregistrement consistant à lire lesdites adresses absolues affectées aux dites instructions dans ledit programme modifié, et à enregistrer dans la mémoire de la puce lesdites instructions et lesdites donnée aux adresses absolues correspondantes.

2. Procédé selon la revendication 1, **caractérisé en ce qu'**il comprend une étape consistant à munir le système d'exploitation de la puce d'un programme (33) interpréteur de commandes et **en ce que** l'étape d'enregistrement dans la mémoire de la puce, au moyen du programme de chargement, d'un programme (15) d'utilisation d'un support à puce, comprend l'enregistrement d'instructions écrites dans un langage évolué, non directement exécutables par le micro-processeur.

3. Procédé selon l'une des revendications 1 ou 2, **caractérisé en ce qu'**il comprend:
- une étape de calcul, par le programme de chargement, des limites des places réservées en mémoire où les instructions et les données du programme d'utilisation se trouvent ;
- une étape d'enregistrement desdites limites dans un descripteur (32).

4. Procédé selon l'une des revendications 1 à 3, **caractérisé en ce que**, si une instruction à charger est une instruction de saut, alors le procédé comprend :
- une étape de calcul d'une adresse absolue de la destination du saut ;
- une étape de modification dans cette instruction, de la destination du saut en remplaçant cette destination par l'adresse absolue du saut calculée ;
- une étape d'enregistrement de l'instruction de saut modifié.

5. Procédé selon l'une des revendications 1 à 4, **caractérisé en ce qu'**il comprend :
- une étape de chargement des données et des instructions du programme d'utilisation dans des zones contiguës de la mémoire ;
- une étape d'enregistrement dans un descripteur de la mémoire, des limites desdites zones contiguës.

6. Procédé selon l'une des revendications 1 à 5, **caractérisé en ce que** l'étape de munir la puce du système d'exploitation est réalisée dès la constitution de cette puce.

## Claims

1. Method of loading in an electronic chip (1) supported by a medium with a chip and comprising a microprocessor (2) and a memory (3, 4) a program for using this medium with a chip, this program comprising instructions that act on the data, the method comprising:
- a step consisting of equipping the chip with an operating system (5) particularly comprising a program (CHAR) for loading in the memory, this operating system controlling the operation of the microprocessor and of the memory, and
- a step of storing (20) said application program in the memory, by means of the program for loading in the memory,
said storage step comprising:
- a step of defining in the application program an amount of space required in the memory (4) of the chip to contain the data to be used by the application program,
- a step, performed at the time of storing the program in the memory, of calculating absolute addresses for storing said instructions and said data used by said program in the memory of the chip, said absolute addresses for each instruction of said program being calculated from an initial absolute address available in the memory for storing said instructions and from a digit place associated with each instruction in said program, and said absolute addresses for each piece of data used by said program being calculated from an initial absolute address available in the memory for storing said data and a relative address allocated in an ordered fashion to each piece of data used by said program,
- a step of modifying said program to be loaded, consisting of replacing, for each instruction of said program, said digit place associated with said instruction by said corresponding calculated absolute address and, for each piece of data used by the program, said ordered relative address allocated to said data by said corresponding calculated absolute address, and
- a storage step consisting of reading said absolute addresses allocated to said instructions in said modified program, and of storing said instructions and said data at the corresponding absolute addresses in the memory of the chip.

2. Method according to claim 1, **characterised in that** it comprises a step consisting of equipping the operating system of the chip with a command interpreter program (33) and **in that** the step of storing a program (15) for using a medium with a chip in the memory of the chip, by means of the loading program, comprises the storage of instructions written in a high-level language, not directly executable by the microprocessor.

3. Method according to one of the claims 1 or 2, **characterised in that** it comprises:
- a step of the loading program calculating the limits of space reserved in the memory where the instructions and the data of the application program are located;
- a step of storing said limits in a descriptor (32).

4. Method according to one of the claims from 1 to 3, **characterised in that**, if an instruction to be loaded is a jump instruction, then the method comprises:
- a step of calculating an absolute address of the destination of the jump;
- a step of modifying, in this instruction, the destination of the jump by replacing this destination with the calculated absolute address of the jump;
- a step of storing the modified jump instruction.

5. Method according to one of the claims from 1 to 4, **characterised in that** it comprises:
- a step of loading the data and instructions of the application program in contiguous zones of the memory;
- a step of storing, in a descriptor of the memory, the limits of said contiguous zones.

6. Method according to one of the claims from 1 to 5, **characterised in that** the step of equipping the chip with the operating system is performed during the manufacturing of this chip.

## Patentansprüche

1. Ladeverfahren in einen auf einem Chipträger getragenen und einen Mikroprozessor (2) und einen Speicher (3, 4) umfassenden elektronischen Chip (1) eines Nutzungsprogramms dieses Chipträgers, wobei dieses Programm auf Daten einwirkende Anweisungen umfasst, wobei das Verfahren Folgendes umfasst:
- eine im Versehen des Chips mit einem Betriebssystem (5) mit insbesondere einem Ladeprogramm (CHAR) in den Speicher bestehenden Stufe, wobei dieses Betriebsystem den Betrieb des Mikroprozessors und des Speichers umfasst, und
- eine Speicherstufe (20) im Speicher mittels des Ladeprogramms des genannten Nutzungsprogramms in den Speicher,
wobei die genannte Speicherstufe Folgendes umfasst:
- in dem Nutzungsprogramm eine Definitionsstufe einer im Speicher (4) des Chips zum Enthalten der durch das Nutzungsprogramm zu nutzenden Daten notwendigen Platzmenge,
- eine zum Zeitpunkt des Speicherns des Speicherprogramms realisierte Berechnungsstufe der absoluten Adressen, an denen im Speicher des genannten Chips die genannten Anweisungen und die genannten, vom genannten Programm genutzten Daten gespeichert werden müssen, wobei die genannten absoluten Adressen für jede Anweisung des genannten Programms ausgehend von einer im Speicher vorhandenen absoluten Ausgangsadresse, um dort die genannten Anweisungen zu speichern, und eines jeder Anweisung in dem genannten Programm zugeordneten Rangs berechnet werden, und wobei die genannten absoluten Adressen für jede der von dem genannten Programm genutzten Daten ausgehend von einer im Speicher vorhandenen absoluten Ausgangsadresse, um dort die genannten Daten zu speichern, und einer geordnet jeder der vom genannten Programm genutzten Daten zugewiesenen relativen Adresse,
eine in dem Ersatz bestehende Änderungsstufe des genannten, bei jeder Anweisung des genannten zu ladenden Programms, wobei der genannte Rang, der der genannten Anweisung durch die entsprechende berechnete absolute Adresse zugeordnet wird und bei jeder der vom genannten Programm genutzten Daten, der gesamten relativen geordneten Adresse, die den genannten Daten zugeordnet wird, durch die entsprechende berechnete absolute Adresse, und
- eine aus dem Lesen der genannten, den genannten Anweisungen in dem genannten geänderten Programm zugeordneten absoluten Adressen und dem Speichern der genannten Anweisungen im Speicher des Chips und der genannten Daten an den entsprechenden absoluten Adressen bestehende Speicherstufe.

2. Verfahren gemäß Anspruch 1, **dadurch gekennzeichnet, dass** es eine in dem Versehen des Betriebssystems mit dem Chip eines Befehl-Interpretationsprogramms (33) bestehende Stufe umfasst und dass die Speicherstufe in dem Speicher des Chips mittels des Ladeprogramms eines Nutzungsprogramms (15) eines Chipträgers das Speichern von in einer nicht direkt durch den Mikroprozessor ausführbaren entwickelten Sprache geschriebenen Anweisungen umfasst.

3. Verfahren gemäß Anspruch 1 oder 2, **dadurch gekennzeichnet, dass** es Folgendes umfasst:
- eine Berechnungsstufe der Grenzen der im Speicher reservierten Plätze, in dem sich die Anweisungen und die Daten des Nutzungsprogramms befinden, durch das Ladeprogramm;
eine Speicherstufe der genannten Grenzen in einem Beschreiber (32).

4. Verfahren gemäß Anspruch 1 bis 3, **dadurch gekennzeichnet, dass**, wenn eine zu ladende Anweisung eine Sprunganweisung ist, das Verfahren dann Folgendes umfasst:
- eine Berechnungsstufe einer absoluten Adresse der Bestimmung des Sprungs;
- eine Änderungsstufe in dieser Anweisung der Bestimmung des Sprungs durch den Ersatz dieser Bestimmung durch die absolute Adresse des berechneten Sprungs;
- eine Speicherstufe der Anweisung des geänderten Sprungs.

5. Verfahren gemäß Anspruch 1 bis 4, **dadurch gekennzeichnet, dass** es Folgendes umfasst:
- eine Ladestufe der Daten und der Anweisungen des Nutzungsprogramms in anliegenden Bereichen des Speichers;
eine Speicherstufe der Grenzen der genannten anliegenden Bereiche in einem Beschreiber des Speichers.

6. Verfahren gemäß Anspruch 1 bis 5, **dadurch gekennzeichnet, dass** die Stufe zum Versehen des Chips des Betriebssystems bereits bei der Bildung dieses Chips realisiert wird.
